# EUROPÄISCHE PATENTSCHRIFT

(11) **EP 1 681 278 B1**
(45) Veröffentlichungstag und Bekanntmachung des Hinweises auf die Patenterteilung: **19.03.2008**
(21) Anmeldenummer: 05026060.3
(22) Anmeldetag: 30.11.2005
(51) Int. Cl.: C04B 35/56, C04B 35/573, B22D 19/00

(54) **Verfahren und Vorrichtung zur Carbidbildner-Infiltration eines porösen kohlenstoffhaltigen Vorkörpers**
Process and device for a carbide forming infiltartion of a porous carbon-containining preform
Procédé et dispositif pour l' infiltration d'un corps preliminaire contenant de carbone pour former un carbure

(30) Priorität: 13.01.2005 DE 102005002633
(43) Veröffentlichungstag der Anmeldung: 19.07.2006
(73) Patentinhaber: Deutsches Zentrum für Luft- und Raumfahrt e.V., 51147 Köln (DE)
(72) Erfinder: Schmidt, Jens, Dr., 70736 Fellbach (DE); Schulte, Rüdiger, 95704 Pullenreuth (DE); Heidenreich, Bernhard, 71679 Asperg (DE)
(74) Vertreter: Hoeger, Stellrecht & Partner Patentanwälte

(56) Entgegenhaltungen:
- EP-A- 0 995 730
- WO-A-03/093194
- DE-A1- 19 834 540
- US-A1- 2003 180 579
- FAVRE A ET AL: "An original way to investigate the siliconizing of carbon materials" CERAMICS INTERNATIONAL, ELSEVIER, AMSTERDAM, NL, Bd. 29, Nr. 3, 2003, Seiten 235-243, XP004410404 ISSN: 0272-8842
- WANG Y ET AL: "The effect of porous carbon preform and the infiltration process on the properties of reaction-formed SiC" CARBON, Bd. 42, Nr. 8-9, 2004, Seiten 1833-1839, XP004509643 ISSN: 0008-6223

## Beschreibung

Die Erfindung betrifft ein Verfahren zur Carbidbildner-Infiltration, insbesondere zur Silicierung, eines porösen kohlenstoffhaltigen Vorkörpers.

Die Erfindung betrifft ferner eine Vorrichtung zur Carbidbildner-Infiltration eines porösen kohlenstoffhaltigen Vorkörpers, insbesondere zur Silicierung des Vorkörpers.

Durch die Infiltration mit einem flüssigen Carbidbildner können offenporöse kohlenstoffhaltige Vorkörper beispielsweise aus SiC (mit einem Restkohlenstoffanteil), Kohlenstoff oder C/C in dichte Verbundkörper umgewandelt werden. Der Carbidbildner wird auf eine Temperatur oberhalb seines Schmelzpunkts erhitzt. Er kann dann kapillar in den Vorkörper eindringen. Die entsprechende Infiltration wird abhängig vom Carbidbildner unter Vakuumbedingungen oder in Edelgasatmosphäre durchgeführt. Der Carbidbildner reagiert teilweise oder vollständig mit dem Kohlenstoff des Vorkörpers unter Bildung von Carbid. Wenn als Carbidbildner Silicium eingesetzt wird, dann wird Siliciumcarbid gebildet. Nach dem Abkühlen liegt ein Werkstück vor, in welchem die Carbid-Phasen, Restkohlenstoff-Phasen sowie Phasen an nicht reagiertem Carbidbildner vorliegen.

Aus der DE 44 18 945 A1 ist ein Verfahren zur Herstellung von siliciuminfiltrierten Siliciumcarbid-Bauteilen bekannt, bei dem die Formkörper aus Kohlenstoff oder Siliciumcarbid-Kohlenstoff-Mischungen auf Brennplatten eines Brennofens angeordnet und durch Brennen mit Silicium infiltriert werden, wobei als Silicium ein Siliciumgranulat verwendet wird und die zu silicierenden Formkörper auf oder in eine Schüttung aus Siliciumgranulat gestellt werden, die auf der Brennplatte aufgebracht ist.

Aus der EP 0 995 730 A1 ist ein Verfahren zur Herstellung silicierter Formkörper bekannt, bei dem mindestens teilweise poröse Grünkörper aus Kohlenstoff mit flüssigem Silicium unter Sauerstoffabschluß infiltriert werden, wobei Spendersilicium-Formkörper auf den Grünkörper aufgelegt werden, der Grünkörper mit aufgelegten Spendersilicium-Formkörpern auf Temperaturen aufgeheizt wird, bei denen Silicium schmilzt und der Grünkörper mit Spendersilicium infiltriert wird, das aus dem Spendersilicium-Formkörper nach unten auf den Grünkörper fließt.

Aus der DE 197 49 462 C1 ist ein Verfahren zur Herstellung eines mit Kohlenstoffasern verstärkten, keramisierten Formkörpers bekannt, bei dem in eine Kohlenstoffasern enthaltende, poröse Vorform des Formkörpers Polymerharz infiltriert und gehärtet wird, der so erhaltene Grünkörper einer Pyrolyse zur Umwandlung des Polymerharzes in Kohlenstoff unterworfen wird und in diesem danach Silicium infiltriert wird. Die Infiltration des flüssigen Siliciums erfolgt in einer Graphitwanne, wobei der pyrolysierte Grünkörper auf eine mit Granulat bedeckte Fläche aufgelegt wird und Siliciumgranulat gleichmäßig auf den Grünkörper aufgebracht wird. In einem Ofen wird das Silicium geschmolzen und flüssiges Silicium infiltriert den Grünkörper von der Oberseite und der Unterseite durch Kapillarwirkung.

In dem Artikel "An original way to investigate the siliconizing of carbon materials" von A. Favre et al. in Ceramics International 29 (2003) 235-243 ist ein Verfahren zur direkten Silikonisierung von Glaskarbon beschrieben, bei dem Silicium in einem Tiegel geschmolzen wird, so daß flüssiges Silicium auf das Kohlenstoffsubstrat fließen kann.

Aus der DE 198 34 540 A1 ist ein Verfahren zur Schmelzinfiltration von porösen Körpern mit flüssigem Metall bzw. Silicium bekannt, bei dem Metall bzw. Silicium aufgeschmolzen und mit porösen Körper in Kontakt gebracht wird, so daß das flüssige Metall bzw. Silicium in die Poren eindringt. Zwei oder mehrere poröse Körper werden übereinander gestapelt, wobei zwischen den Körpern metallhaltige bzw. siliciumhaltige Formteile als Abstandshalter eingebracht werden und der resultierende Stapel aus abwechselnd porösen Körpern und metallhaltigen bzw. siliciumhaltigen Formteilen erhitzt wird, so daß das Silicium schmilzt und in die Poren der porösen Körper eindringt.

Aus der WO 03/093194 A1 ist ein Verfahren zur Herstellung von Siliciumcarbid bekannt, bei dem ein Silicium bereitstellender Körper auf einer Oberfläche eines Vorkörpers in einem Ofen positioniert wird.

Aus der US 2003/0180579 A1 ist ebenfalls ein Verfahren zur Herstellung eines Siliciumcarbid-Kompositmaterials bekannt.

Der Erfindung liegt die Aufgabe zugrunde, ein Verfahren und eine Vorrichtung der eingangs genannten Art bereitzustellen, mit dem sich eine paßgenaue Carbidbildner-Infiltration durchführen läßt.

Diese Aufgabe wird bei dem eingangs genannten Verfahren erfindungsgemäß dadurch gelöst, daß flüssiges Carbidbildnermaterial auf eine Oberfläche des Vorkörpers aufgegossen und/oder aufgetropft wird, wobei festes Carbidbildnermaterial in mindestens einem Tiegel geschmolzen wird und ein Tiegelboden des mindestens einen Tiegels mit einer oder mehreren Öffnungen versehen wird, über die flüssiges Carbidbildnermaterial dem Vorkörper zugeführt wird.

Bei dem erfindungsgemäßen Verfahren steht das feste Carbidbildnermaterial und der Vorkörper nicht in direktem Kontakt zueinander, d. h. zwischen diesen liegt ein Abstand. Dieser Abstand wird durch das Aufgießen bzw. Auftropfen überbrückt.

Durch das erfindungsgemäße Verfahren läßt sich eine paßgenaue Carbidbildner-Infiltration und damit beispielsweise paßgenaue und über einen Bauteilquerschnitt gleichmäßige Silicierung eines porösen Vorkörpers erreichen. Insbesondere lassen sich auch Vorkörper mit großen Abmessungen (beispielsweise größer 500 mm) infiltrieren.

Wenn, wie aus dem Stand der Technik bekannt, der poröse Vorkörper in direktem Kontakt mit dem festen Siliciumgranulat (aus dem das flüssige Carbidbildnermaterial hergestellt wird) steht oder mittels einer Pufferplatte mit dem Siliciumgranulat in Kontakt steht, dann kann es zu nicht kontrollierbaren Reaktionen kommen, die zu einer Mengenveränderung des Silicium-Reservoirs führen. Außerdem können im Vakuum erhebliche Siliciumabdampfraten vorliegen.

Es besteht dann immer die Gefahr, daß dem Bauteil zuwenig Carbidbildner (insbesondere zuwenig Silicium) oder zuviel Carbidbildner (zuviel Silicium) angeboten wird, d. h. eine Diskrepanz zwischen dem Siliciumangebot und der zur vollständigen Infiltration des Vorkörpers benötigten Siliciummenge besteht. Untersilicierte Werkstücke weisen noch eine hohe Restporosität auf. Übersilicierte Werkstücke müssen auf aufwendige Weise entsiliciert werden, da nicht reagiertes und nicht infiltriertes Restsilicium an der Probenoberfläche anhaftet. Dieser Überschuß muß durch mechanische Nachbearbeitung oder über Pufferplatten entfernt werden.

Bei der erfindungsgemäßen Lösung läßt sich die Zufuhr an flüssigem Carbidbildnermaterial zu dem Vorkörper räumlich und mengenmäßig genau steuern. Dadurch läßt sich eine Übersilicierung und eine Untersilicierung vermeiden. Insbesondere läßt es sich vermeiden, daß sich in einem Tiegelboden ein Siliciumrest ansammelt, welcher zu hohen thermischen Spannungen beim Abkühlen mit der Gefahr des Werkstückverzugs und der Rißbildung im Werkstück führen kann.

Durch das erfindungsgemäße Verfahren lassen sich auch Werkstücke mit filigranen Oberflächenstrukturen, mit Nuten oder mit Bohrungen konturgenau herstellen. Durch das Aufgießen bzw. Auftropfen des flüssigen Carbidbildnermaterials ist eine paßgenaue Carbidbildner-Infiltration und insbesondere Silicierung möglich.

Durch das erfindungsgemäße Verfahren ist es auch möglich, die Carbidbildner-Infiltration in unmittelbarem zeitlichen Anschluß an eine Pyrolyse durchzuführen, ohne daß beispielsweise der entsprechende Vorkörper nach der Pyrolyse abgekühlt werden muß. Da die Pyrolyse üblicherweise in einem Temperaturbereich unterhalb der Schmelztemperatur des Carbidbildners durchgeführt wird, muß anschließend an die Pyrolyse nur noch die Temperatur weiter erhöht werden, um ein Aufgießen bzw. Auftropfen von flüssigem Carbidbildnermaterial durchführen zu können. Bei aus dem Stand der Technik bekannten Verfahren muß jedoch nach der Pyrolyse der entsprechende Vorkörper aus dem Ofen entnommen werden und dieser muß abgekühlt sein, um einen direkten Kontakt zwischen dem Siliciumgranulat und dem Vorkörper zu ermöglichen.

Festes Carbidkeramikmaterial wird in mindestens einem Tiegel geschmolzen. Über den Tiegel läßt es sich dann dem Vorkörper zuführen. Der Tiegel läßt sich getrennt von dem Vorkörper positionieren.

Der mindestens eine Tiegel wird mit einer oder mehreren Öffnungen versehen, über die flüssiges Carbidbildnermaterial dem Vorkörper zuführbar ist. Mittels der Öffnungen ist eine Quelle für flüssiges Carbidbildnermaterial gebildet. Die Öffnungen lassen sich so anordnen und ausbilden, daß eine paßgenaue und gleichmäßige Carbidbildner-Infiltration ermöglicht ist.

Insbesondere ist es vorteilhaft, wenn flüssiges Carbidbildnermaterial der Oberfläche mittels eines Flüssigkeitsstrahls und/oder einer Tropfenabfolge zugeführt wird. Dadurch läßt sich, ohne daß ein direkter Kontakt zwischen dem Ausgangsmaterial des Carbidbildners und dem Vorkörper vorliegen muß, eine gleichmäßige Beaufschlagung einer Oberfläche des Vorkörpers mit Carbidbildnermaterial erreichen. Weiterhin läßt sich eine Infiltration über einen relativ großen Flächenbereich erreichen. Es ist auch eine paßgenaue Infiltration und insbesondere paßgenaue Silicierung möglich, um an einer Oberfläche angeordnete oder gebildete Strukturen wie beispielsweise Nuten oder dergleichen silicieren zu können.

Insbesondere wird eine Quelle für das Carbidbildnermaterial in einem Abstand zu der mit Carbidbildner zu beaufschlagenden Oberfläche des Vorkörpers positioniert. Dadurch wird ein direkter Kontakt zwischen festem Carbidbildnermaterial und dem Vorkörper vermieden, was wiederum eine paßgenaue und gleichmäßige Carbidbildner-Infiltration und insbesondere Silicierung ermöglicht.

Günstig ist es, wenn eine Quelle für das flüssige Carbidbildnermaterial bezogen auf die Schwerkraftrichtung oberhalb der mit Carbidbildner zu beaufschlagenden Oberfläche des Vorkörpers positioniert wird. Dadurch läßt sich eine paßgenaue und gleichmäßige Infiltration des Vorkörpers von oben her erreichen. Überschußsilicium kann von dem Vorkörper abfließen und aufgefangen werden.

Insbesondere werden der Vorkörper und der Bereich, in dem flüssiges Carbidkeramikmaterial erzeugt wird, räumlich getrennt. Dadurch ist ein direkter Kontakt zu dem Vorkörper vermieden.

Ganz besonders vorteilhaft ist es, wenn flüssiges Carbidbildnermaterial durch Schmelzen von festem Carbidbildnermaterial erzeugt wird. Die Erzeugung erfolgt insbesondere in einem Ofen unter Vakuumbedingungen. Das flüssige Carbidbildnermaterial (Carbidbildner-Schmelze) kann dann auf den Vorkörper aufgetropft und/oder aufgegossen werden.

Beispielsweise wird das feste Carbidbildnermaterial in Granulatform vorgegeben. Das Ausgangsmaterial ist beispielsweise Siliciumgranulat. Ein solches Granulat läßt sich auf einfache Weise aufschmelzen, wobei eine Steuerung des Schmelzflusses auf einfache Weise möglich ist.

Günstig ist es, wenn das feste Carbidkeramikmaterial bezogen auf die Schwerkraftrichtung oberhalb des Vorkörpers in einem Abstand zu diesem positioniert wird. Dadurch ist ein direkter Kontakt zwischen dem Vorkörper und dem festen Carbidkeramikmaterial vermieden und die Carbidkeramikmaterial-Schmelze läßt sich auf den Vorkörper aufgießen bzw. auftropfen.

Insbesondere wird der mindestens eine Tiegel bezogen auf die Schwerkraftrichtung oberhalb des Vorkörpers positioniert. Flüssiges Carbidbildnermaterial kann dann auf einfache Weise beispielsweise über eine oder mehrere Öffnungen in dem Tiegel auf den Vorkörper aufgegossen oder aufgetropft werden.

Es hat sich als vorteilhaft erwiesen, wenn die mindestens eine Öffnung eine Öffnungsbreite im Bereich zwischen 0,1 mm und 10 mm und insbesondere im Bereich zwischen 0,5 mm und 10 mm aufweist. Bei einer Öffnung mit rundem Querschnitt entspricht die Öffnungsbreite dem Durchmesser.

Insbesondere wird eine Mehrzahl von Öffnungen vorgesehen, wobei die Öffnungen so angeordnet und so ausgebildet werden, daß der Vorkörper gleichmäßig mit Carbidbildnermaterial beaufschlagbar ist. Dadurch läßt sich eine paßgenaue und gleichmäßige Carbidbildner-Infiltration und insbesondere Silicierung erreichen. Es lassen sich auch Bauteile mit größeren Abmessungen gleichmäßig silicieren. Es ist weiterhin möglich, bestimmte Strukturen an dem Vorkörper auszubilden bzw. zu silicieren wie beispielsweise Nuten.

Günstig ist es, wenn für den mindestens einen Tiegel eine oder mehrere bezüglich der Horizontalen geneigte Flächen vorgesehen werden. Über diese geneigten Flächen läßt sich der Fluß an flüssigem Carbidbildnermaterial steuern, insbesondere in Richtung einer oder mehreren Öffnungen. Über die schrägen Flächen kann auch dafür gesorgt werden, daß für einen Carbidbildner-Infiltrationsprozeß im wesentlichen ein unverbrauchter Carbidbildner in dem mindestens einen Tiegel verbleibt.

Es kann vorgesehen sein, daß der mindestens eine Tiegel eine oder mehrere vertiefte Bereiche wie Rinnen oder wie Mulden aufweist, in welchen mindestens eine Öffnung angeordnet ist. Über einen vertieften Bereich läßt sich eine Anpassung an einen zu infiltrierenden Vorkörper erreichen. Beispielsweise kann eine nutenförmige Rinne vorgesehen werden, um eine entsprechende Nut in einem Vorkörper zu infiltrieren.

Günstig ist es, wenn in dem mindestens einen Tiegel Brennhilfsmittel für den Carbidbildner zur Steuerung des Flusses an flüssigem Carbidbildnermaterial angeordnet werden. Über die Brennhilfsmittel läßt sich die Carbidbildnerströmung insbesondere derart steuern, daß im wesentlichen das gesamte flüssige Carbidbildnermaterial durch Öffnungen hindurch auf den Vorkörper aufgießbar oder auftropfbar ist. Als Brennhilfsmittel sind insbesondere dichte Bauteile geeignet (Bauteile, welche eine geringe oder keine Offenporosität aufweisen), welche aus reinem Bornitrid, aus beschichtetem Graphit (insbesondere mit einer Bornitrid-, Siliciumcarbid- oder Siliciumnitrid-Beschichtung) oder aus reinem Siliciumnitrid hergestellt sind. Die Brennhilfsmittel sollen nicht mit der Siliciumschmelze reagieren können.

Bei einer einfachen Ausführungsform werden die Brennhilfsmittel in Kegelform ausgebildet. Ein Kegel stellt schräge Flächen bereit, die für eine entsprechende Strömungsführung sorgen. Dadurch läßt es sich insbesondere gewährleisten, daß das von dem mindestens einen Tiegel aufgenommene feste Carbidbildnermaterial vollständig geschmolzen wird und die Flüssigkeit vollständig dem Vorkörper zugeführt wird.

Es ist grundsätzlich möglich, daß der mindestens eine Tiegel insbesondere in Segmente oder Kammern unterteilt wird. Über jedes Segment oder jede Kammer läßt sich dann unabhängig von den anderen Segmenten bzw. Kammern eine Carbidbildnerzuführung zu einem oder mehreren Vorkörpern erreichen. Dadurch ist es beispielsweise möglich, eine Mehrzahl von Vorkörpern gleichzeitig (aber unabhängig voneinander) mit flüssigem Carbidbildner zu versorgen.

Es hat sich als vorteilhaft erwiesen, wenn der Abstand zwischen der zu beaufschlagenden Oberfläche des Vorkörpers und einer Öffnung des mindestens einen Tiegels für flüssiges Carbidbildnermaterial im Bereich zwischen 1 mm und 15 mm liegt. Wenn der Abstand zu groß ist, dann besteht die Gefahr, daß flüssiges Carbidbildnermaterial von der Oberfläche wegspritzt. Wenn der Abstand zu klein ist, dann besteht grundsätzlich die Gefahr, daß ein Auftropfen bzw. Aufgießen nicht mehr möglich ist.

Günstig ist es auch, wenn der Vorkörper in einem Tiegel positioniert wird, wobei vorzugsweise der Tiegel für den Vorkörper und der Tiegel für das Carbidbildnermaterial räumlich getrennt sind.

Ganz besonders vorteilhaft ist es, wenn zwischen dem Vorkörper und einem Tiegelboden kohlenstoffhaltiges Material positioniert wird. Überschüssiges Silicium, welches den Vorkörper durchströmt hat bzw. an diesem vorbeigeströmt ist, kann durch das kohlenstoffhaltige Material aufgenommen werden und mit diesem reagieren. Dadurch läßt es sich beispielsweise verhindern, daß sich Überschußsilicium in Ecken des Tiegels ansammelt. Beim Erstarren solcher Ansammlungen während eines Abkühlungsprozesses besteht grundsätzlich die Gefahr von lokalen Spannungen in den Tiegelecken, die zu einer Schädigung des Tiegels führen können. Weiterhin wird durch das kohlenstoffhaltige Material der Vorkörper vom Tiegelboden getrennt. Dadurch lassen sich thermische Spannungen während des Abkühlungsvorgangs des entsprechenden Werkstücks reduzieren. Über das teilweise über Carbidbildung konvertierte kohlenstoffhaltige Material, welches eine entsprechende gute thermische Leitfähigkeit aufweist, läßt sich Wärme vom Werkstück abführen.

Insbesondere wird das kohlenstoffhaltige Material in Granulatform oder Pulverform vorgegeben. Beispielsweise wird Koks oder Graphitpulver verwendet. Dadurch läßt sich auf einfache Weise eine Porosität bezüglich des kohlenstoffhaltigen Materials ausbilden, um eine große Reaktionsfläche für den Carbidbildner bereitzustellen und weiterhin läßt sich auf einfache Weise kohlenstoffhaltiges Material zwischen dem Vorkörper und dem Tiegelboden positionieren. Das kohlenstoffhaltige Material kann beispielsweise auch in Folienform (beispielsweise als Graphitfolie) vorliegen, welche auf kohlenstoffhaltigem Granulat positioniert ist bzw. auf carbidbildnerhaltigem Granulat positioniert ist. Es ist auch möglich, gewellte oder gefaltete C/C-Strukturen oder Graphitstrukturen als Puffer für überschüssige Siliciumschmelze zu verwenden.

Es ist ferner besonders vorteilhaft, wenn das kohlenstoffhaltige Material nicht offenporös ist. Dadurch werden Kapillarkräfte vermieden, die den in den Vorkörper infiltrierten Carbidbildner aus diesem herausziehen könnten.

Insbesondere wird die Carbidbildner-Infiltration in einem Ofen durchgeführt.

Es ist dabei besonders vorteilhaft, wenn die Carbidbildner-Infiltration im Anschluß an eine Pyrolyse durchgeführt wird, wobei die Pyrolyse und die Carbidbildner-Infiltration im gleichen Ofen ohne Entnahme des Vorkörpers nach der Pyrolyse durchgeführt wird. Dadurch läßt sich der Schritt des Herausnehmens des Vorkörpers aus dem Ofen sparen. Ferner muß der Vorkörper nicht abgekühlt werden; die Schmelztemperatur des Carbidbildners liegt in der Regel oberhalb der Pyrolysetemperatur, so daß nach der Pyrolyse im wesentlichen nur noch eine Aufheizung über die Schmelztemperatur des Carbidbildnermaterials notwendig wird.

Um Delamination bei der Pyrolyse zu vermeiden, wird üblicherweise eine Beschwerung des entsprechenden Werkstücks (insbesondere einer C/C-Preform) vorgesehen. Günstig ist es, wenn die Beschwerung des Werkstücks bei der Pyrolyse mindestens teilweise durchlässig für flüssiges Carbidbildnermaterial ist. Dadurch kann in einem direkt anschließenden Infiltrationsprozeß Carbidbildnermaterial trotz Beschwerung die entsprechende Oberfläche des Vorkörpers beaufschlagen.

Insbesondere wird ein Gitter als Beschwerung verwendet. Ein Gitter hat entsprechende Öffnungen, durch die hindurch Carbidbildner-Schmelze zu dem Vorkörper gelangen kann.

Beispielsweise wird als Carbidbildner ein metallisches Material verwendet. Beispiele für solche Carbidbildner sind Chromlegierungen oder Titanlegierungen oder Kupfer-Titan-Legierungen. Es kann dabei Silicium enthalten sein oder der Carbidbildner kann siliciumfrei sein.

Ein bevorzugtes Material zur Carbidbildung ist Silicium in Reinform oder als Mischungsanteil. Es lassen sich dadurch Siliciumcarbid-Werkstoffe herstellen.

Günstig ist es, wenn eine Tiegelkombination mit einem Tiegel zur Aufnahme eines oder mehrerer Vorkörper und mit einem Tiegel für Carbidkeramikmaterial gebildet wird.

In diesem Zusammenhang ist es möglich, eine Mehrzahl von Tiegelkombinationen in einem Stapel anzuordnen. Dadurch läßt sich eine Mehrzahl von Bauteilen in dem gleichen Aufheizungsprozeß mit Carbidbildner infiltrieren.

Die eingangs genannte Aufgabe wird bei der eingangs genannten Vorrichtung erfindungsgemäß dadurch gelöst, daß die Vorrichtung mindestens einen ersten Tiegel zur Aufnahme eines oder mehrerer Vorkörper, und einen zweiten Tiegel zur Aufnahme von Carbidbildnermaterial umfaßt, wobei der zweite Tiegel bezogen auf die Schwerkraftrichtung oberhalb des ersten Tiegels angeordnet ist und ein Tiegelboden des zweiten Tiegels eine oder mehrere Öffnungen aufweist, über welche flüssiges Carbidkeramikmaterial auf den mindestens einen Vorkörper in dem ersten Tiegel auftropfbar und/oder aufgießbar ist.

Die erfindungsgemäße Vorrichtung weist die bereits im Zusammenhang mit dem erfindungsgemäßen Verfahren erläuterten Vorteile auf.

Insbesondere läßt sich durch das Vorsehen eines ersten Tiegels und eines zweiten Tiegels eine räumliche Trennung zwischen der Bildung von flüssigem Carbidbildnermaterial und dem Vorkörper erreichen, so daß ein direkter Kontakt zwischen dem festen Carbidbildnermaterial und dem Vorkörper vermieden ist. Dadurch wiederum läßt sich Carbidbildnermaterial auf den Vorkörper aufgießen bzw. auftropfen und es läßt sich so eine paßgenaue und gleichmäßige Carbidbildner-Infiltration erreichen.

Die erfindungsgemäße Vorrichtung läßt sich als Ganzes in einem Ofen positionieren. Sie läßt sich insbesondere zur Pyrolyse und anschließender Carbidbildner-Infiltration des oder der Vorkörper verwenden.

Weitere vorteilhafte Ausgestaltungen der erfindungsgemäßen Vorrichtung wurden ebenfalls bereits im Zusammenhang mit dem erfindungsgemäßen Verfahren erläutert.

Insbesondere sind der erste Tiegel und der zweite Tiegel so angeordnet und ausgebildet, daß ein Tiegelboden des zweiten Tiegels beabstandet zu einem zu infiltrierenden Vorkörper ist, welcher in dem ersten Tiegel angeordnet ist. Dadurch läßt sich eine paßgenaue und gleichmäßige Carbidbildner-Infiltration des oder der Vorkörper erreichen.

Der zweite Tiegel weist eine oder mehrere Öffnungen auf, über welche flüssiges Carbidbildnermaterial auf den mindestens einen Vorkörper im ersten Tiegel auftropfbar und/oder aufgießbar ist.

Es hat sich als kostengünstig erwiesen, wenn mindestens ein Tiegel aus Graphit hergestellt ist, wobei es vorteilhaft ist, wenn Tiegeloberflächen mindestens teilweise mit einem Trennmittel versehen sind. Es ist auch denkbar, daß ein Tiegel beispielsweise aus Bornitrid hergestellt ist.

Wenn Silicium als Carbidbildner verwendet wird, dann ist es vorteilhaft, wenn als Trennmittel Bornitrid. Es kann auch Siliciumcarbid als Trennmittel eingesetzt werden. Beispielsweise wird eine entsprechende Tiegeloberfläche mit einer Bornitridsuspension bestrichen. Wenn ein Tiegel mit Bornitrid beschichtet ist, dann kommt es zu einer leichten Kontaminierung der Schmelze mit Bor. Bor wirkt als Katalysator bei der Siliciumcarbid-Bildung und führt zur Kornvergrößerung. Eine Bornitrid-Beschichtung kann bewußt zur Dotierung der Schmelze bei der Infiltration eines Bauteils genutzt werden; die Bornitrid-Schicht am Tiegel verbraucht sich, da das Bor sukzessive von der Siliciumschmelze mitgeführt wird. Es ist auch möglich, daß Siliciumcarbid als Trennmittel (bei beliebigen Carbidbildnern) verwendet wird. Dies ist insbesondere vorteilhaft, wenn eine hochreine Siliciumcarbidkeramik bereitgestellt werden soll. Eine Siliciumcarbid-Beschichtung eines Tiegels kann beispielsweise durch eine getrennte Dampfbeschichtung oder CVD-Beschichtung vor dem ersten Benutzen des Tiegels erfolgen. Siliciumcarbid-Oberflächen besitzen gute Benetzungseigenschaften gegenüber Siliciumschmelzen und haben eine schützende Wirkung gegenüber dem reaktiven Angriff der Siliciumschmelze. Die nachfolgende Beschreibung bevorzugter Ausführungsformen dient im Zusammenhang mit der Zeichnung der näheren Erläuterung der Erfindung. Es zeigen:
- Figur 1: eine seitliche Schnittansicht einer schematischen Darstellung eines ersten Ausführungsbeispiels einer erfindungsgemäßen Vorrichtung zur Carbidbildner-Infiltration eines porösen kohlenstoffhaltigen Vorkörpers;
- Figur 2: eine Draufsicht auf ein Ausführungsbeispiel eines Tiegels, welcher Carbidbildner aufnimmt;
- Figur 3: ein weiteres Ausführungsbeispiel einer erfindungsgemäßen Vorrichtung in seitlicher Schnittansicht;
- Figur 4: ein weiteres Ausführungsbeispiel einer erfindungsgemäßen Vorrichtung in einer schematischen Schnittansicht;
- Figur 5: eine schematische Schnittansicht eines weiteren Ausführungsbeispiels einer erfindungsgemäßen Vorrichtung und
- Figur 6: eine schematische Teildarstellung eines weiteren Ausführungsbeispiels.

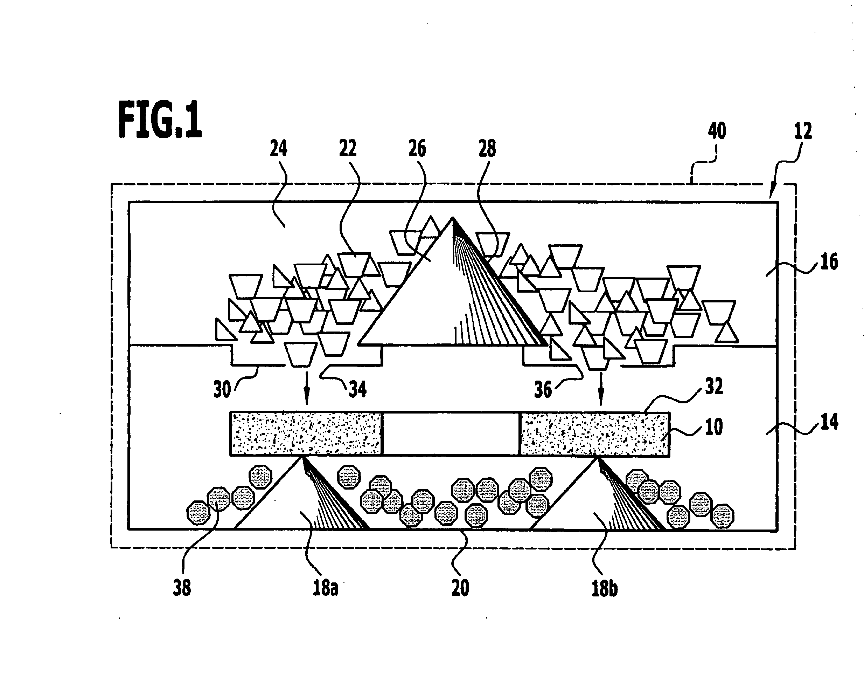

Ein erstes Ausführungsbeispiel einer erfindungsgemäßen Vorrichtung zur Carbidbildner-Infiltration eines porösen Vorkörpers 10, welche in Figur 1 schematisch gezeigt und dort mit 12 bezeichnet ist, umfaßt einen ersten Tiegel 14 und einen zweiten Tiegel 16.

Der erste Tiegel 14 und der zweite Tiegel 16 sind beispielsweise aus Graphit hergestellt. Graphitoberflächen des ersten Tiegels 14 und/oder des zweiten Tiegels 16, die mit Carbidbildner-Dampf oder Carbidbildner-Schmelze in Kontakt kommen können, sind mit einem Trennmittel beschichtet. Wird beispielsweise Silicium als Carbidbildner eingesetzt, dann kann Bornitrid als Trennmittel verwendet werden. Dazu werden beispielsweise Graphitoberflächen des oder der entsprechenden Tiegel 14, 16 mit einer Bornitridsuspension bestrichen. Auch die Verwendung von Siliciumcarbid als Trennmittel ist möglich.

Wenn Chrom als Carbidbildner verwendet wird, dann ist eine Beschichtung der Tiegel 14, 16 mit Seltenerd-Oxiden vorteilhaft.

Die Tiegel 14 und 16 können eine runde oder eine eckige Form aufweisen.

Der erste Tiegel 14 nimmt den zu infiltrierenden Vorkörper 10 auf. Bei dem in Figur 1 gezeigten Ausführungsbeispiel hat der Vorkörper 10 eine Ringform.

Der Vorkörper 10 ist auf einer Mehrzahl von Kegeln 18a, 18b positioniert, so daß er beabstandet zu einem Tiegelboden 20 des ersten Tiegels 14 ist.

Die Kegel 18a, 18b sind beispielsweise aus Graphit hergestellt, wobei die Oberflächen der Kegel 18a, 18b mit einem Trennmittel beschichtet sind, wie es oben beschrieben wurde.

Der zweite Tiegel 16 ist bezogen auf die Schwerkraftrichtung oberhalb des ersten Tiegels 14 positioniert. Beispielsweise sind der erste Tiegel 14 und der zweite Tiegel 16 miteinander verbunden.

Der zweite Tiegel 16 dient zur Aufnahme von Carbidbildnermaterial 22. Das Carbidbildnermaterial 22 wird insbesondere in Granulatform in einen Aufnahmeraum 24 des zweiten Tiegels 16 gegeben. Bei der Silicierung des Vorkörpers 10 wird Siliciumgranulat in dem Aufnahmeraum 24 positioniert.

Es ist auch möglich, daß ein Carbidbildnermaterial-Reservoir getrennt von dem zweiten Tiegel 16 ist. Beispielsweise läßt sich über ein solches Carbidbildner-Reservoir eine Mehrzahl von Tiegeln mit Carbidbildner versorgen. Günstigerweise sind dann Zuführungen oberhalb der Schmelztemperatur des Carbidbildnermaterials 22 gehalten, damit der Carbidbildner nicht erstarrt. Dies kann durch aktives Heizen oder durch Isolieren der Zuführungen erreicht werden.

In dem zweiten Tiegel 16 ist ein Graphitkegel 26 angeordnet. Dieser ist mit einem Trennmittel beschichtet. Durch den Graphitkegel 26 sind schräge Flächen 28 gebildet, d. h. es sind Flächen gebildet, welche bezüglich der Horizontalen (die senkrecht zur Schwerkraftrichtung ist) geneigt sind. Durch diese schrägen Flächen 28 läßt sich der Fluß an flüssigem Carbidbildner steuern. Der Graphitkegel 26 dient dadurch als Brennhilfsmittel zur Steuerung des Flusses der Carbidbildner-Schmelze.

Es können auch schräge Flächen vorgesehen sein, welche eine andere geometrische Form aufweisen und insbesondere nicht an einem Kegel gebildet sind.

Ein Tiegelboden 30 des zweiten Tiegels 16 ist beabstandet zu dem Vorkörper 10 und insbesondere beabstandet zu einer Oberfläche 32 des Vorkörpers 10, über welche die Carbidbildner-Infiltration des Vorkörpers 10 stattfindet.

In dem Tiegelboden 30 des zweiten Tiegels 16 sind eine oder mehrere Öffnungen 34 angeordnet, durch die flüssiges Carbidbildnermaterial, d. h. Carbidbildner-Schmelze, auf den Vorkörper 10 aufgegossen und/oder aufgetropft werden kann. Die Öffnungen 34 liegen bezogen auf die Schwerkraftrichtung oberhalb des Vorkörpers 10 und sind beabstandet zu diesem. Ein typischer Abstandsbereich liegt in der Größenordnung 1 mm bis ca. 10 mm. In diesem Abstandsbereich läßt sich insbesondere ein Wegspritzen von flüssigem Carbidbildner von der Oberfläche 32 des Vorkörpers 10 verhindern, wenn die Carbidbildner-Schmelze aus der oder den Öffnungen 34 der Oberfläche 32 zuströmt. Die Öffnungsbreite (bei Öffnungen mit rundem Querschnitt der Durchmesser) liegt im Bereich zwischen 0,1 und 10 mm.

Der zweite Tiegel 16 mit den Öffnungen 34 im Tiegelboden 30 bildet eine Quelle für flüssiges Carbidbildnermaterial (Carbidbildner-Schmelze), mit welcher der Vorkörper 10 beaufschlagbar ist. Diese Quelle ist dabei beabstandet zu dem Vorkörper 10 angeordnet und von diesem getrennt. Insbesondere ist festes Carbidbildnermaterial 22 von dem Vorkörper 10 getrennt, d. h. das feste Carbidbildnermaterial 22 (welches insbesondere in Granulatform vorliegt) steht nicht in direktem Kontakt mit dem Vorkörper 10. Dadurch ist eine räumliche Trennung zwischen dem Vorkörper 10 und dem zweiten Tiegel 16, welcher das Carbidbildnermaterial 22 aufnimmt, hergestellt.

Die Öffnungen 34 können in vertieften Bereichen wie Rinnen oder Mulden 36 angeordnet sein. Solche Rinnen oder Mulden 36 sind angepaßt an die Form des Vorkörpers 10 ausgebildet bzw. an Strukturen angepaßt ausgebildet, welche über Carbidbildner-Infiltration am Vorkörper 10 zu infiltrieren sind. Beispielsweise lassen sich mit einer Mehrzahl von nutenförmigen beabstandeten Kanälen bzw. Rinnen verrippte Strukturen an dem Vorkörper 10 mit Carbidbildner beaufschlagen.

Die Öffnungen 34 sind vorzugsweise an oder in der Nähe von tiefsten Stellen im Tiegelboden 30 angeordnet. Der Graphitkegel 26 sorgt für die Zuführung von flüssigem Carbidbildnermaterial zu den Öffnungen 34.

In dem ersten Tiegel 14 ist zwischen dem Vorkörper 10 und dem Tiegelboden 20 ein kohlenstoffhaltiges Material 38 angeordnet. Vorzugsweise berührt das kohlenstoffhaltige Material 38 den Vorkörper 10 nicht. (Es ist auch möglich, daß der Vorkörper auf dem kohlenstoffhaltigen Material 38 sitzt, wenn ein reincarbidisches Werkstück ohne nicht-reagierten Carbidbildneranteil hergestellt werden soll. Durch das kohlenstoffhaltige Material wird die nicht-reagierte Restschmelze dem Vorkörper entzogen. In diesem Fall sollte das kohlenstoffhaltige Material offenporös sein.) Es ist dabei grundsätzlich möglich, daß der Vorkörper 10 mindestens teilweise auf diesem kohlenstoffhaltigen Material positioniert ist. Bei dem kohlenstoffhaltigen Material kann es sich beispielsweise um Kohlenstoffgranulat beispielsweise Koksgranulat oder Graphitpulver handeln. Das kohlenstoffhaltige Material 38 ist dabei nicht offenporös.

Als Puffer für die überschüssige Siliciumschmelze können beispielsweise auch Graphitfolien eingesetzt werden, die auf Granulat (Kohlenstoffgranulat oder Carbidbildnergranulat) positioniert sind. Es können beispielsweise auch gewellte oder faltige C/C-Strukturen oder Graphitstrukturen verwendet werden. Dadurch läßt sich die Gefahr von Materialanhaftungen oder Carbidbildnernasenbildungen oder Verbackungen des Carbidbildnerüberschusses mit dem infiltrierten Bauteil minimieren.

Das erfindungsgemäße Verfahren wird im folgenden anhand der Silicierung des Vorkörpers 10 erläutert:

Der Vorkörper 10 ist ein kohlenstoffhaltiger offenporöser Vorkörper, welcher beispielsweise durch Pyrolyse eines Grünlings hergestellt wurde. Es kann sich dabei beispielsweise um einen Kohlenstoffkörper (der überwiegend aus Kohlenstoff besteht) oder um einen C/C-Vorkörper handeln. Der Kohlenstoffkörper ist beispielsweise aus cellulosehaltigen Ausgangsmaterialien hergestellt. Er kann auch einen Faseranteil enthalten. Eine weitere Möglichkeit ist ein SiC-Vorkörper, welcher Restkohlenstoff beispielsweise in einem Umfang von 5 % bis 10 % enthält.

Das Carbidbildnermaterial 22 wird über seinen Schmelzpunkt erhitzt. Bei der Verwendung von Silicium erfolgt eine Aufheizung auf eine Temperatur oberhalb von ca. 1420°C. Die Erhitzung erfolgt in einem Ofen 40 unter Vakuumbedingungen.

Es ist vorteilhaft, wenn große Mengen an festem Carbidbildnermaterial 22 eingesetzt werden, dieses vor dem Infiltrieren möglichst gleichmäßig aufzuschmelzen. Große, noch nicht aufgeschmolzene Granulatkörper, die sonst die Öffnungen 34 verstopfen können, schwimmen dann auf. Günstigerweise werden feine Kornfraktionen eingesetzt, die schnell und gleichmäßig aufschmelzen und eine homogene Schmelze bilden, um weitgehend zu verhindern, daß noch nicht aufgeschmolzene Carbidbildner-Körper die Öffnungen 34 verstopfen können.

In den Aufnahmeraum 24 wurde zuvor festes Siliciumgranulat positioniert. Das Silicium beginnt zu schmelzen und das flüssige Siliciummaterial fließt über die Öffnungen 34 auf die Oberfläche 32 des Vorkörpers 10. Die Siliciumschmelze wird dadurch auf die Oberfläche 32 des Vorkörpers 10 aufgegossen bzw. aufgetropft. Die Beaufschlagung der Oberfläche 32 des Vorkörpers 10 erfolgt über Flüssigkeitsstrahlen und/oder über eine Tropfenabfolge. Die Siliciummenge ist so gewählt, daß Silicium im Überschuß vorliegt.

Das flüssige Silicium tritt kapillar in den Vorkörper 10 ein, d. h. dieser wird mit Silicium infiltriert. Das Silicium reagiert teilweise oder vollständig mit dem Kohlenstoff des Vorkörpers 10 unter Bildung von Siliciumcarbid.

Flüssiges Silicium, welches den Vorkörper 10 nach unten durchdringt, wird von dem kohlenstoffhaltigen Material 38 aufgefangen und das überschüssige Silicium kann mit diesem kohlenstoffhaltigen Material 38 reagieren.

Wenn das kohlenstoffhaltige Material 38 nicht offenporös ist, dann wird dadurch verhindert, daß (wenn das kohlenstoffhaltige Material 38 in Kontakt mit dem Vorkörper 10 steht) bereits in den Vorkörper 10 infiltriertes Silicium aus dem Vorkörper 10 über Kapillarwirkung entfernt wird.

Durch das kohlenstoffhaltige Material wird der Vorkörper 10 auch von dem Tiegelboden 20 getrennt. Dadurch lassen sich thermische Spannungen im Vorkörper 10 während des Abkühlens von der Infiltrationstemperatur reduzieren. Von dem Vorkörper 10 läßt sich die Wärme über Abstrahlung von der Bauteiloberfläche und über das teilweise in SiC konvertierte kohlenstoffhaltige Material 38 abführen, welches durch die Konversion eine gute thermische Leitfähigkeit aufweist.

(Der Vorkörper ist dasjenige Werkstück, an welchem die Carbidbildnerschmelzen-Infiltration durchgeführt wird. Das Ergebnis ist ein verändertes Werkstück mit Carbidanteilen.)

Nach der Carbidbildnerschmelzen-Infiltration des Werkstücks 10 erfolgt eine Abkühlung auf Raumtemperatur. Das dabei entstandene Werkstück ist ein Verbundkörper aus einem Werkstoff, welcher Carbidphasen, Restkohlenstoff-phasen sowie nicht reagierten Carbidbildner in Poren oder Kapillaren umfaßt.

Durch das erfindungsgemäße Verfahren lassen sich beispielsweise SiSiC- oder C/C-SiC-Werkstoffe herstellen.

Durch das erfindungsgemäße Verfahren ist eine paßgenaue Carbidbildner-Infiltration und insbesondere Silicierung von porösen Vorkörpern 10 (welche beispielsweise Kohlenstoff-Vorkörper oder SiC-Vorkörper sind) möglich. Durch Anpassung und Anordnung der Öffnungen 34 läßt sich eine gezielte und definierte Carbidbildner-Beaufschlagung des Vorkörpers 10 durchführen.

Durch die Trennung zwischen dem ersten Tiegel 14 zur Aufnahme des Vorkörpers 10 und dem zweiten Tiegel 16 zur Aufnahme des Carbidbildnermaterials 22 lassen sich nichtkontrollierbare Reaktionen, die eine Mengenveränderung im Carbidbildner-Angebot bewirken können, weitgehend verhindern.

Durch die steuerbare Beaufschlagung des Vorkörpers 10 mit flüssigem Carbidbildner läßt sich eine Diskrepanz zwischen angebotenem Carbidbildner und benötigtem Carbidbildner verhindern. Dadurch läßt sich insbesondere eine Untersilicierung des Vorkörpers 10, bei der dieser eine hohe Restporosität aufweist, verhindern. Weiterhin läßt sich eine Übersilicierung des Vorkörpers 10 verhindern, bei der ein zu hohes Angebot in Carbidbildner in Bezug auf die zu füllenden Poren vorliegt. Bei der Übersilicierung tritt das Problem auf, daß Carbidbildner, welcher nicht reagiert hat und den Vorkörper nicht infiltriert hat, an der Oberfläche 32 haften bleibt. Dieser Überschuß an Carbidbildner muß durch mechanische Nachbearbeitung wie Schleifen oder Fräsen von der Oberfläche 32 entfernt werden; diese mechanische Nachbearbeitung ist mit einem sehr hohen Aufwand verbunden.

Das erfindungsgemäße Verfahren läßt sich so durchführen, daß keine nachträgliche Entsilicierung mehr notwendig ist und dabei die Restporosität des so hergestellten Werkstücks minimiert ist.

Das erfindungsgemäße Verfahren läßt sich insbesondere im Zusammenhang mit Vorkörpern 10 mit großen Abmessungen (beispielsweise größer 500 mm) einsetzen; bei dem erfindungsgemäßen Verfahren ist eine paßgenaue Carbidbildner-Infiltration und insbesondere Silicierung durchführbar.

Bei einem aus dem Stand der Technik bekannten Verfahren, bei dem im Siliciumüberschuß gearbeitet wird, sammelt sich Silicium zwischen dem infiltrierten Werkstück und einem Tiegelboden an. Dieser Siliciumrest führt zu hohen thermischen Spannungen beim Abkühlen, was einen Verzug des Bauteils zur Folge haben kann und zur Rißbildung führen kann. Diese Probleme lassen sich mit dem erfindungsgemäßen Verfahren vermeiden.

Weiterhin lassen sich mit dem erfindungsgemäßen Verfahren auch Werkstücke mit beispielsweise filigranen Oberflächenstrukturen oder mit Nuten oder Bohrungen auch bei geringen Abmessungen konturgetreu herstellen, da über das erfindungsgemäße Verfahren eine genaue Beaufschlagung des Vorkörpers mit flüssigem Carbidbildnermaterial möglich ist.

Es ist grundsätzlich möglich, daß in dem ersten Tiegel 14 eine Mehrzahl von Vorkörpern 10 positioniert wird.

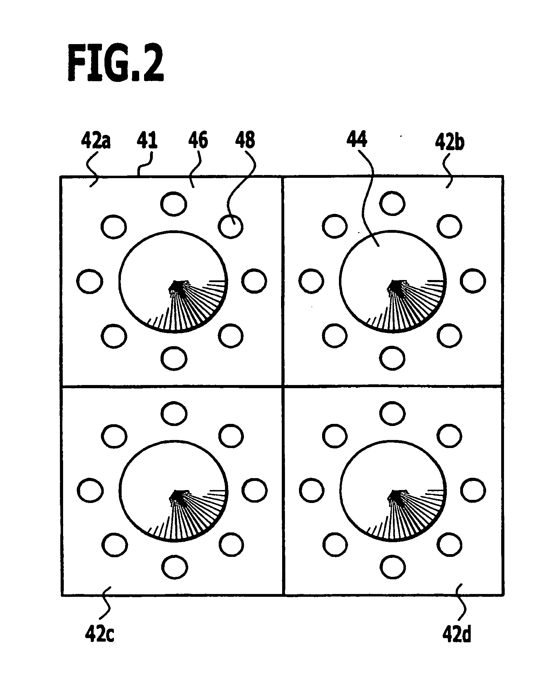

Es ist auch möglich, daß der zweite Tiegel 16 unterteilt ist, wie anhand von Figur 2 erläutert wird.

Als zweiter Tiegel ist ein Tiegel 41 vorgesehen, welcher eine Mehrzahl von getrennten Kammern oder Segmenten 42a, 42b, 42c, 42d aufweist. In jeder Kammer ist ein Graphitkegel 44 als Brennhilfsmittel zur Steuerung des Flusses der Carbidbildner-Schmelze angeordnet. Um die jeweiligen Graphitkegel 44 verteilt sind in einem Tiegelboden 46 Öffnungen 48 angeordnet. Die Öffnungen 48 liegen beispielsweise auf einem Kreis. Durch die Öffnungen 48 kann flüssiges Carbidbildnermaterial, d. h. Carbidbildner-Schmelze, auf einen entsprechenden Vorkörper aufgegossen bzw. aufgetropft werden.

Durch die Unterteilung in die Kammern 42a, 42b, 42c, 42d ist eine entsprechend der Unterteilung des Tiegels 40 getrennte Dosierung möglich.

In dem ersten Tiegel 14 sind beispielsweise ausgerichtet zu den Kammern 42a, 42b, 42c, 42d vier entsprechende Vorkörper angeordnet. Der erste Tiegel 14 ist dabei nicht in Kammern unterteilt. Die Anordnung der Öffnungen 48 ist jeweils so, daß Carbidbildner-Schmelze aus einer entsprechenden Kammer nur zu jeweils einem zugeordneten Vorkörper gelangt. Das flüssige Carbidbildnermaterial läßt sich dabei gleichmäßig auf den entsprechenden Vorkörper auftropfen bzw. aufgießen, wobei die Carbidbildnerschmelze-Abgabe der Kammern 42a, 42b, 42c, 42d sich nicht gegenseitig beeinflußt.

Es ist auch möglich, daß die Pyrolyse (zur Herstellung des Vorkörpers 10) und die anschließende Carbidbildner-Infiltration in dem gleichen Ofen stattfindet, ohne daß der Vorkörper 10 nach der Pyrolyse aus dem Ofen entnommen wird. Die Carbidbildner-Infiltration und insbesondere eine Silicierung läßt sich mittels des erfindungsgemäßen Verfahrens in direktem Anschluß an die Pyrolyse durchführen. Dies hat den Vorteil, daß der Vorkörper 10 nach der Pyrolyse nicht abgekühlt werden muß und nicht dem Ofen entnommen werden muß, sondern eben in dem Ofen 40 verbleiben kann. Die Temperatur für die Carbidbildner-Infiltration liegt oberhalb der Pyrolysetemperatur; insbesondere liegt die Schmelztemperatur von Silicium oberhalb der Pyrolysetemperatur.

Es kann dabei notwendig sein, während der Pyrolyse für eine Beschwerung des entsprechenden Werkstücks zu sorgen, um Delaminationen zu vermeiden.

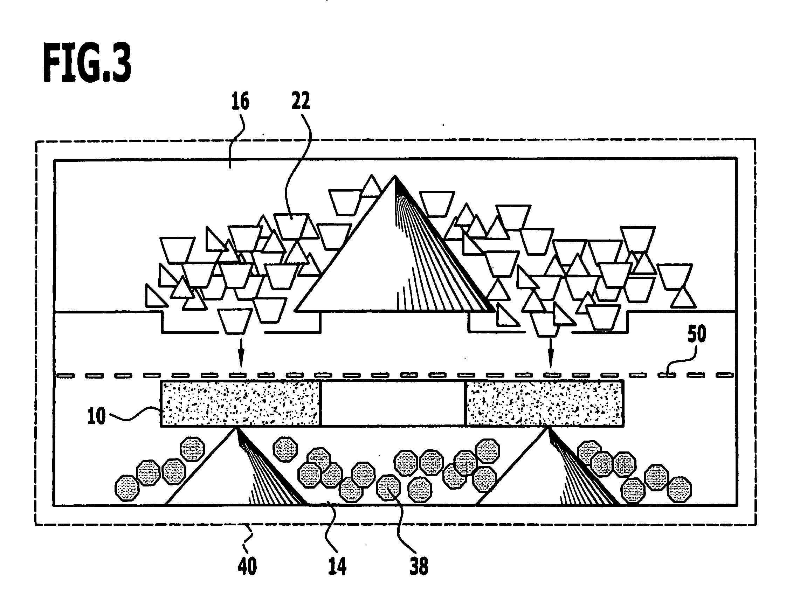

Bei einer Variante der Ausführungsform gemäß Figur 1 ist zur Beschwerung ein Gitter 50 vorgesehen, welches für die Carbidbildner-Schmelze teilweise durchlässig ist (Figur 3). Dadurch kann flüssiges Carbidbildnermaterial durch das Gitter 50 hindurch auf die Oberfläche 32 des Vorkörpers 10 gelangen. Das Gitter 50 weist entsprechende Öffnungen für die Carbidbildner-Schmelze auf.

Das Gitter 50 ist zwischen dem Vorkörper 10 und dem zweiten Tiegel 16 angeordnet (Figur 3). Das Gitter 50 liegt aufgrund seines Eigengewichts auf dem Vorkörper 10 auf.

Das Gitter 50 ist beispielsweise aus Graphit hergestellt und mit BN beschichtet.

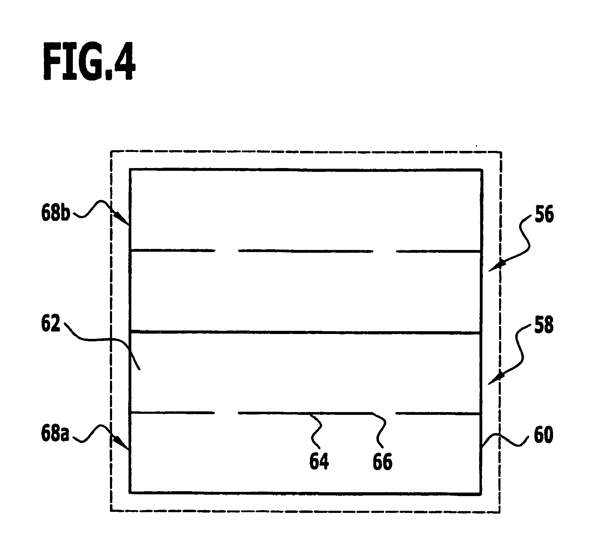

Es ist grundsätzlich auch möglich, daß eine erfindungsgemäße Vorrichtung einen Tiegelstapel 56 aufweist (Figur 4). Der Tiegelstapel 56 umfaßt dabei eine Mehrzahl von Tiegelkombinationen 58 eines ersten Tiegels 60 und eines zweiten Tiegels 62, wobei der erste Tiegel 60 grundsätzlich so ausgebildet ist wie der oben beschriebene erste Tiegel 14 und der zweite Tiegel 62 grundsätzlich so ausgebildet ist wie der oben beschriebene zweite Tiegel 16. Ein Tiegelboden 64 des zweiten Tiegels 62 weist eine oder mehrere Öffnungen 66 zum Aufgießen bzw. Auftropfen von Carbidbildner-Schmelze auf einen Vorkörper auf.

Eine Mehrzahl solcher Tiegelkombinationen 58 (in Figur 4 die Tiegelkombinationen 68a, 68b) sind aufeinandergestapelt, wobei die entsprechenden Tiegelkombinationen 68a, 68b miteinander verbunden sind. Es lassen sich dadurch mehrere Werkstücke in einem Prozeß herstellen.

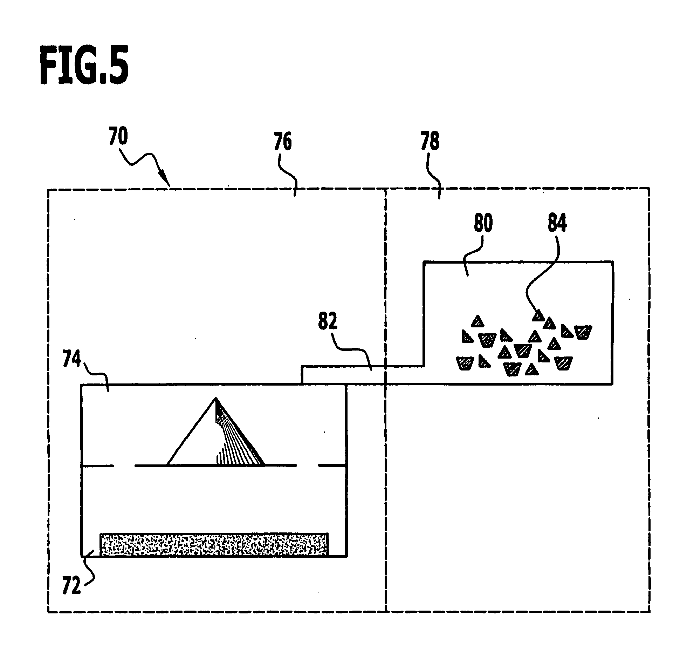

Bei einem weiteren Ausführungsbeispiel einer erfindungsgemäßen Vorrichtung, welches in Figur 5 gezeigt und dort mit 70 bezeichnet ist, ist ein erster Tiegel 72 zur Aufnahme eines Vorkörpers vorgesehen sowie ein zweiter Tiegel 74 zur Zuführung von flüssiger Carbidbildner-Schmelze in Strahlform und/oder Tropfenform zu dem Vorkörper. Der erste Tiegel 72 und der zweite Tiegel 74 sind in einem ersten Ofen 76 angeordnet.

Benachbart zu dem ersten Ofen 76 ist ein zweiter Ofen 78 positioniert. Dieser zweite Ofen 78 weist einen Aufnahmeraum 80 für den Carbidbildner auf (Carbidbildner-Reservoir). Der Aufnahmeraum 80 steht beispielsweise über eine oder mehrere Leitungen 82 in fluidwirksamer Verbindung mit dem zweiten Tiegel 74. Über diese Leitung 82 läßt sich Carbidbildner-Schmelze dem zweiten Tiegel 74 zuführen, wobei über den zweiten Tiegel 74 wiederum der Vorkörper im ersten Tiegel 72 mit Carbidbildner-Schmelze beaufschlagbar ist.

Die Leitung oder Leitungen 82 sind aus einem hochtemperaturbeständigen Material wie beispielsweise SiSiC hergestellt und thermisch isoliert.

In dem zweiten Ofen 78 läßt sich festes Carbidbildnermaterial 84 schmelzen und die Schmelze läßt sich über die Leitung oder Leitungen 82 in den ersten Ofen 76 einkoppeln und dabei dem zweiten Tiegel 74 zuführen. Um Carbidbildner-Schmelze herzustellen, muß dabei nur der Aufnahmeraum 80 (d. h. das Carbidbildner-Reservoir) auf der hohen Temperatur gehalten werden, bei der festes Carbidbildnermaterial schmilzt. Der erste Ofen 76 kann auf einer niedrigeren Temperatur gehalten werden. Es besteht dabei die grundsätzliche Möglichkeit, daß ein Vorkörper nach der Carbidbildner-Infiltration aus dem ersten Ofen 76 entnommen wird und ein neuer zu infiltrierender Vorkörper in dem ersten Ofen 76 in den ersten Tiegel 72 positioniert wird.

Mit der Vorrichtung 70 läßt sich ein hoher Vorkörperdurchsatz erreichen; die eigentliche Carbidbildner-Infiltration, welche mit dem erfindungsgemäßen Verfahren durchgeführt ist, läßt sich in einigen Minuten durchführen. Die entsprechenden zu infiltrierenden Vorkörper lassen sich über ein Schleusensystem in den ersten Ofen 76 einkoppeln.

Wenn Carbidbildner-Schmelze von einer externen Vorrichtung (im Beispiel der Figur 5 von dem zweiten Ofen 78 ausgehend) in den ersten Ofen 76 eingekoppelt wird, dann läßt sich eine kontinuierliche Verfahrensführung erreichen, d. h. die Menge an Carbidbildner, mit der der Vorkörper infiltrierbar ist, ist nicht auf das Aufnahmevolumen des zweiten Tiegels 74 beschränkt, da der zweite Tiegel 74 durch das Reservoir 80 nachfüllbar ist.

Es ist auch grundsätzlich möglich, daß die Nachfüllung des zweiten Tiegels 74 über ein Carbidbildner-Reservoir nicht über flüssige Carbidbildner-Schmelze erfolgt, sondern über festes Carbidbildnermaterial beispielsweise in Granulatform. Dazu wird von extern laufend festes Carbidbildnermaterial in den entsprechenden Tiegel 74 eingekoppelt. Das Schmelzen wird dann in dem Tiegel 74 durchgeführt.

Alternativ ist ein Batch-Betrieb möglich, bei dem beispielsweise mit Austausch eines oder mehrerer Vorkörper auch ein Auffüllen eines Siliciumreservoirs erfolgt.

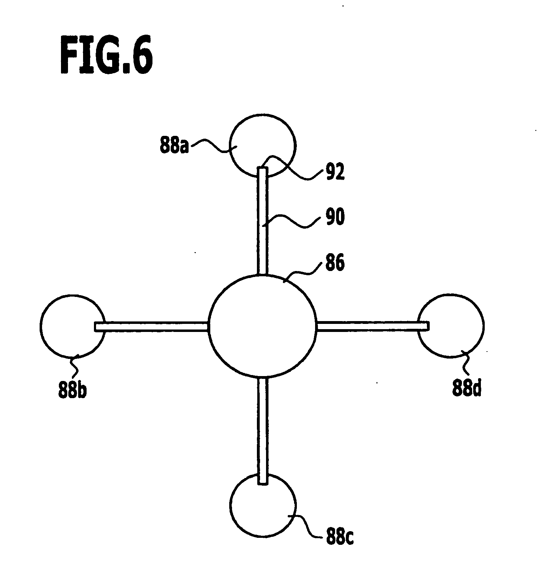

Bei einem in Figur 6 teilweise gezeigten Ausführungsbeispiel einer erfindungsgemäßen Vorrichtung ist ein Aufnahmeraum 86 vorgesehen, welcher beispielsweise über einen Tiegel gebildet ist. In dem Aufnahmeraum 86 ist flüssiges Carbidbildnermaterial aufgenommen bzw. wird dort erzeugt. Der Aufnahmeraum 86 ist mit einem oder mehreren Tiegeln 88a, 88b, 88c, 88d fluidwirksam verbunden. Diese Tiegel 88a, 88b, 88c, 88d nehmen jeweils entsprechende, mit Carbidbildnermaterial zu infiltrierende Vorkörper auf.

Die Verbindung des Aufnahmeraums 86 mit den Tiegeln 88a, 88b, 88c, 88d erfolgt über entsprechende hochtemperaturbeständige Leitungen 90, welche beispielsweise in Rinnenform ausgebildet sind. Eine jeweilige Mündung 92 einer solchen Leitung 90 bildet dabei eine Quelle für flüssiges Carbidbildnermaterial für den zugeordneten Tiegel. Die Mündung 92 liegt bezogen auf die Schwerkraft oberhalb des entsprechenden Vorkörpers, welcher in dem Tiegel aufgenommen ist.

Bei einer Variante dieser Vorrichtung ist der Aufnahmeraum 86 fluidwirksam mit Tiegeln für Carbidbildnermaterial verbunden, welche jeweils oberhalb von Vorkörpern liegen. Die Vorkörper können in einem oder mehreren Tiegeln aufgenommen sein. Über den Aufnahmeraum 86 wird über die entsprechenden Leitungen dann flüssiges Carbidbildnermaterial zu diesen Tiegeln transportiert, wobei dann wiederum aus diesen Tiegeln über die entsprechenden Öffnungen flüssiges Carbidbildnermaterial auf die zu infiltrierenden Vorkörper aufgetropft und/oder aufgegossen werden kann. Diese Tiegel sind dann die für den bzw. die Vorkörper die Quellen für flüssiges Carbidbildnermaterial.

In einem konkreten Ausführungsbeispiel wurde ein SiSiC-Ring mit einem Außendurchmesser von 111 mm, einem Innendurchmesser von 70 mm und einer Höhe von 10 mm aus einem Kohlenstoff-Vorkörper hergestellt. Es wurde dabei eine Anordnung entsprechend Figur 1 gewählt mit einem BN imprägnierten Graphittiegel sowie mit einem BN imprägnierten Graphitkegel 26 als Brennhilfsmittel. Als Carbidbildner wurde metallisches Reinsilicium (99,9 %-ig, hochrein) verwendet.

Der zu infiltrierende Vorkörper wurde ca. 5 mm oberhalb des kohlenstoffhaltigen Materials 38 auf Kegeln im ersten Tiegel 14 positioniert. Der zweite Tiegel 16 wurde im Abstand von 10 mm über den zu infiltrierenden Vorkörper 10 gesetzt. Er wies Öffnungen mit einem Durchmesser von 3 mm auf.

Die Silicierung wurde bei 1650°C im Vakuum durchgeführt. Es wurde dabei die Temperatur ausgehend von 20°C auf 1650°C in einem Zeitraum von 12,5 h mit einer Aufheizrate von 130,4 K/h erhöht. Diese Temperatur von 1650°C wurde dann für eine Zeit von 0,6 h gehalten. Anschließend wurde innerhalb einer Zeitdauer von 3,26 h die Temperatur von 1650°C auf 20°C abgekühlt (entsprechend einer Abkühlrate von 500 K/h).

Die Ausgangsmasse des Kohlenstoff-Vorkörpers 10 betrug dabei 50,35 g. Der Vorkörper wurde auf der Basis von Holzmehl, Koks und Pulverharz hergestellt. Die Masse des kohlenstoffhaltigen Materials 38 betrug ca. 150 g, wobei Kohlenstoffgranulat eingesetzt wurde. Das Siliciumangebot lag bei 290 % entsprechend 146,02 g im zweiten Tiegel 16. Die Siliciumaufnahme durch den Vorkörper 10 lag bei 262,4 %.

Der so hergestellte SiSiC-Ring hatte nach der Infiltration eine Dichte von 2,51 g/cm³. Das überschüssige, nicht durch das Werkstück aufgenommene Silicium wurde vollständig durch das kohlenstoffhaltige Material 38 aufgenommen. Im oberen Tiegel 16 blieb kein freies Silicium zurück. An dem fertig hergestellten Werkstück haftete oberflächlich kein freies Silicium. Es konnte weiterhin kein freies Silicium im ersten Tiegel 14 festgestellt werden.

## Patentansprüche

1. Verfahren zur Carbidbildner-Infiltration, insbesondere zur Silicierung, eines porösen kohlenstoffhaltigen Vorkörpers, bei dem flüssiges Carbidbildnermaterial auf eine Oberfläche des Vorkörpers aufgegossen und/oder aufgetropft wird, wobei festes Carbidbildnermaterial in mindestens einem Tiegel geschmolzen wird und ein Tiegelboden des mindestens einen Tiegels mit einer oder mehreren Öffnungen versehen wird, über die flüssiges Carbidbildnermaterial dem Vorkörper zugeführt wird.

2. Verfahren nach Anspruch 1, **dadurch gekennzeichnet, daß** flüssiges Carbidbildnermaterial der Oberfläche als Flüssigkeitsstrahl und/oder Tropfenabfolge zugeführt wird.

3. Verfahren nach Anspruch 1 oder 2, **dadurch gekennzeichnet, daß** eine Quelle für das flüssige Carbidbildnermaterial in einem Abstand zu der mit Carbidbildner zu beaufschlagenden Oberfläche des Vorkörpers positioniert wird.

4. Verfahren nach einem der vorangehenden Ansprüche, **dadurch gekennzeichnet, daß** eine Quelle für das flüssige Carbidbildnermaterial bezogen auf die Schwerkraftrichtung oberhalb der mit Carbidbildner zu beaufschlagenden Oberfläche des Vorkörpers positioniert wird.

5. Verfahren nach einem der vorangehenden Ansprüche, **dadurch gekennzeichnet, daß** der Vorkörper und der Bereich, in dem flüssiges Carbidbildnermaterial erzeugt wird, räumlich getrennt werden.

6. Verfahren nach einem der vorangehenden Ansprüche, **dadurch gekennzeichnet, daß** flüssiges Carbidbildnermaterial durch Schmelzen von festem Carbidbildnermaterial erzeugt wird.

7. Verfahren nach Anspruch 6, **dadurch gekennzeichnet, daß** das feste Carbidbildnermaterial in Granulatform vorgegeben wird.

8. Verfahren nach Anspruch 6 oder 7, **dadurch gekennzeichnet, daß** das feste Carbidbildnermaterial bezogen auf die Schwerkraftrichtung oberhalb des Vorkörpers im Abstand zu diesem positioniert wird.

9. Verfahren nach einem der vorangehenden Ansprüche, **dadurch gekennzeichnet, daß** der mindestens eine Tiegel bezogen auf die Schwerkraftrichtung oberhalb des Vorkörpers positioniert wird.

10. Verfahren nach einem der vorangehenden Ansprüche, **dadurch gekennzeichnet, daß** die mindestens eine Öffnung eine Öffnungsbreite im Bereich zwischen 0,1 mm und 10 mm aufweist.

11. Verfahren nach einem der vorangehenden Ansprüche, **dadurch gekennzeichnet, daß** eine Mehrzahl von Öffnungen vorgesehen wird, wobei die Öffnungen so angeordnet und so ausgebildet werden, daß der Vorkörper gleichmäßig mit flüssigem Carbidbildnermaterial beaufschlagbar ist.

12. Verfahren nach einem der vorangehenden Ansprüche, **dadurch gekennzeichnet, daß** für den mindestens einen Tiegel eine oder mehrere bezüglich der Horizontalen geneigte Flächen vorgesehen werden.

13. Verfahren nach einem der vorangehenden Ansprüche, **dadurch gekennzeichnet, daß** der mindestens eine Tiegel einen oder mehrere vertiefte Bereiche aufweist, in welchen mindestens eine Öffnung angeordnet ist.

14. Verfahren nach einem der vorangehenden Ansprüche, **dadurch gekennzeichnet, daß** in dem mindestens einen Tiegel Brennhilfsmittel für den Carbidbildner zur Steuerung des Flusses an flüssigem Carbidbildnermaterial angeordnet werden.

15. Verfahren nach Anspruch 14, **dadurch gekennzeichnet, daß** die Brennhilfsmittel in Kegelform ausgebildet werden.

16. Verfahren nach einem der vorangehenden Ansprüche, **dadurch gekennzeichnet, daß** der mindestens eine Tiegel unterteilt wird.

17. Verfahren nach einem der vorangehenden Ansprüche, **dadurch gekennzeichnet, daß** der Abstand zwischen der zu beaufschlagenden Oberfläche des Vorkörpers und einer Öffnung des mindestens einen Tiegels für flüssiges Carbidbildnermaterial im Bereich zwischen 1 mm und 15 mm liegt.

18. Verfahren nach einem der vorangehenden Ansprüche, **dadurch gekennzeichnet, daß** der Vorkörper in einem Tiegel positioniert wird.

19. Verfahren nach Anspruch 18, **dadurch gekennzeichnet, daß** zwischen dem Vorkörper und einem Tiegelboden kohlenstoffhaltiges Material positioniert wird.

20. Verfahren nach Anspruch 18 oder 19, **dadurch gekennzeichnet, daß** das kohlenstoffhaltige Material in Granulatform oder Pulverform vorgegeben wird.

21. Verfahren nach Anspruch 19 oder 20, **dadurch gekennzeichnet, daß** das kohlenstoffhaltige Material nicht offenporös ist.

22. Verfahren nach einem der vorangehenden Ansprüche, **dadurch gekennzeichnet, daß** die Carbidbildner-Infiltration in einem Ofen durchgeführt wird.

23. Verfahren nach einem der vorangehenden Ansprüche, **dadurch gekennzeichnet, daß** die Carbidbildner-Infiltration im Anschluß an eine Pyrolyse durchgeführt wird, wobei die Pyrolyse und die Carbidbildner-Infiltration im gleichen Ofen ohne Entnahme des Vorkörpers nach der Pyrolyse durchgeführt wird.

24. Verfahren nach Anspruch 23, **dadurch gekennzeichnet, daß** eine Beschwerung des Werkstücks bei der Pyrolyse verwendet wird, welche mindestens teilweise durchlässig für flüssiges Carbidbildnermaterial ist.

25. Verfahren nach Anspruch 24, **dadurch gekennzeichnet, daß** ein Gitter als Beschwerung verwendet wird.

26. Verfahren nach einem der vorangehenden Ansprüche, **dadurch gekennzeichnet, daß** als Carbidbildner ein metallisches Material verwendet wird.

27. Verfahren nach einem der vorangehenden Ansprüche, **dadurch gekennzeichnet, daß** als Carbidbildner Silicium verwendet wird.

28. Verfahren nach einem der vorangehenden Ansprüche, **dadurch gekennzeichnet, daß** eine Tiegelkombination mit einem Tiegel zur Aufnahme eines oder mehrerer Vorkörper und mit einem Tiegel für Carbidkeramikmaterial gebildet wird.

29. Verfahren nach Anspruch 28, **dadurch gekennzeichnet, daß** eine Mehrzahl von Tiegelkombinationen in einem Stapel angeordnet wird.

30. Vorrichtung zur Carbidbildner-Infiltration eines porösen kohlenstoffhaltigen Vorkörpers (10), insbesondere zur Silicierung des Vorkörpers (10), umfassend mindestens einen ersten Tiegel (14) zur Aufnahme eines oder mehrerer Vorkörper (10), und einen zweiten Tiegel (16) zur Aufnahme von Carbidbildnermaterial (22), wobei der zweite Tiegel (16) bezogen auf die Schwerkraftrichtung oberhalb des ersten Tiegels (14) angeordnet ist und ein Tiegelboden (30) des zweiten Tiegels (16) eine oder mehrere Öffnungen (34) aufweist, über welche flüssiges Carbidbildnermaterial auf den mindestens einen Vorkörper (10) in dem ersten Tiegel (14) auftropfbar und/oder aufgießbar ist.

31. Vorrichtung nach Anspruch 30, **dadurch gekennzeichnet, daß** der erste Tiegel (14) und der zweite Tiegel (16) so angeordnet und ausgebildet sind, daß ein Tiegelboden (30) des zweiten Tiegels (16) beabstandet zu einem zu infiltrierenden Vorkörper (10) ist, welcher in dem ersten Tiegel (14) angeordnet ist.

32. Vorrichtung nach Anspruch 30 oder 31, **dadurch gekennzeichnet, daß** die mindestens eine Öffnung (34) eine Öffnungsbreite im Bereich zwischen 0,1 mm und 10 mm aufweist.

33. Vorrichtung nach einem der Ansprüche 30 bis 32, **dadurch gekennzeichnet, daß** die mindestens eine Öffnung (34) in einem vertieften Bereich (36) angeordnet ist.

34. Vorrichtung nach einem der Ansprüche 30. bis 33, **dadurch gekennzeichnet, daß** der zweite Tiegel (16) mindestens eine schräge Fläche (28) umfaßt.

35. Vorrichtung nach Anspruch 34, **dadurch gekennzeichnet, daß** in dem zweiten Tiegel (16) ein Kegel (26) aus Brennhilfsmitteln angeordnet ist.

36. Vorrichtung nach einem der Ansprüche 30 bis 35, **dadurch gekennzeichnet, daß** mindestens ein Tiegel (14; 16) aus Graphit hergestellt ist.

37. Vorrichtung nach einem der Ansprüche 30 bis 36, **dadurch gekennzeichnet, daß** Tiegeloberflächen mindestens teilweise mit einem Trennmittel versehen sind.

38. Vorrichtung nach Anspruch 37, **dadurch gekennzeichnet, daß** als Trennhilfsmittel Bornitrid oder Siliciumcarbid eingesetzt ist.

39. Vorrichtung nach einem der Ansprüche 30 bis 38, **dadurch gekennzeichnet, daß** im ersten Tiegel (14) ein kohlenstoffhaltiges Material (38) zwischen Tiegelboden (20) und Vorkörper (10) angeordnet ist.

40. Vorrichtung nach einem der Ansprüche 30 bis 39, **dadurch gekennzeichnet, daß** der zweite Tiegel (41) unterteilt ist.

41. Vorrichtung nach einem der Ansprüche 30 bis 40, **dadurch gekennzeichnet, daß** eine Beschwerung (50) für den Vorkörper (10) bei der Pyrolyse vorgesehen ist, welche mindestens teilweise durchlässig ist für flüssiges Carbidbildnermaterial.

42. Vorrichtung nach Anspruch 41, **dadurch gekennzeichnet, daß** die Beschwerung als Gitter (50) ausgebildet ist.

43. Vorrichtung nach Anspruch 41 oder 42, **dadurch gekennzeichnet, daß** die Beschwerung (50) zwischen dem Vorkörper (10) und dem zweiten Tiegel (16) positioniert ist.

44. Vorrichtung nach einem der Ansprüche 30 bis 43, **dadurch gekennzeichnet, daß** ein Stapel (56) mit einer Mehrzahl von Tiegelkombinationen (68a, 68b) eines ersten Tiegels (60) und eines zweiten Tiegels (62) gebildet ist.

## Claims

1. Method for carbide former infiltration, in particular for siliconisation, of a porous carbon-containing preform, in which liquid carbide former material is poured and/or dripped onto a surface of the preform, wherein solid carbide former material is melted in at least one crucible and a crucible base of the at least one crucible is provided with one or more openings, through which liquid carbide former material is supplied to the preform.

2. Method according to claim 1, **characterised in that** liquid carbide former material is supplied to the surface as a liquid jet and/or drip sequence.

3. Method according to claim 1 or 2, **characterised in that** a source of the liquid carbide former material is positioned at a spacing from the surface of the preform to be acted upon by the carbide former.

4. Method according to any one of the preceding claims, **characterised in that** a source of the liquid carbide former material is positioned above the surface of the perform to be acted upon by the carbide former in relation to the direction of gravitational force.

5. Method according to any one of the preceding claims, **characterised in that** the preform and the region in which liquid carbide former material is produced, are spatially separated.

6. Method according to any one of the preceding claims, **characterised in that** liquid carbide former material is produced by melting solid carbide former material.

7. Method according to claim 6, **characterised in that** the solid carbide former material is provided in granular form.

8. Method according to claim 6 or 7, **characterised in that** the solid carbide former material is positioned above the preform at a spacing therefrom in relation to the direction of gravitational force.

9. Method according to any one of the preceding claims, **characterised in that** the at least one crucible is positioned above the preform in relation to the direction of gravitational force.

10. Method according to any one of the preceding claims, **characterised in that** the at least one opening has an opening width in the range between 0.1 mm and 10 mm.

11. Method according to any one of the preceding claims, **characterised in that** a plurality of openings is provided, the openings being arranged and configured in such a way that the preform can be uniformly acted upon by liquid carbide former material.

12. Method according to any one of the preceding claims, **characterised in that** one or more faces which are inclined in relation to the horizontal, are provided for the at least one crucible.

13. Method according to any one of the preceding claims, **characterised in that** the at least one crucible has one or more recessed regions, in which at least one opening is arranged.

14. Method according to any one of the preceding claims, **characterised in that** firing aids for the carbide former to control the flow of liquid carbide former material are arranged in the at least one crucible.

15. Method according to claim 14, **characterised in that** the firing aids are configured in conical form.

16. Method according to any one of the preceding claims, **characterised in that** the at least one crucible is divided.

17. Method according to any one of the preceding claims, **characterised in that** the spacing between the surface of the preform to be acted upon and an opening of the at least one crucible for liquid carbide former material is in the range between 1 mm and 15 mm.

18. Method according to any one of the preceding claims, **characterised in that** the preform is positioned in a crucible.

19. Method according to claim 18, **characterised in that** carbon-containing material is positioned between the preform and a crucible base.

20. Method according to claim 18 or 19, **characterised in that** the carbon-containing material is provided in granular form or powder form.

21. Method according to claim 19 or 20, **characterised in that** the carbon-containing material is not open-porous.

22. Method according to any one of the preceding claims, **characterised in that** the carbide former infiltration is carried out in a furnace.

23. Method according to any one of the preceding claims, **characterised in that** the carbide former infiltration is carried out following a pyrolysis, the pyrolysis and the carbide former infiltration being carried out in the same furnace without removal of the preform after the pyrolysis.

24. Method according to claim 23, **characterised in that** a loading of the workpiece is used during the pyrolysis, which is at least partially permeable to liquid carbide former material.

25. Method according to claim 24, **characterised in that** a grid is used as the loading.

26. Method according to any one of the preceding claims, **characterised in that** a metallic material is used as the carbide former.

27. Method according to any one of the preceding claims, **characterised in that** silicon is used as the carbide former.

28. Method according to any one of the preceding claims, **characterised in that** a crucible combination is formed with a crucible for receiving one or more preforms and with a crucible for carbide ceramic material.

29. Method according to claim 28, **characterised in that** a plurality of crucible combinations are arranged in a stack.

30. Device for carbide former infiltration of a porous carbon-containing preform (10), in particular for siliconisation of the preform (10), comprising at least a first crucible (14) for receiving one or more preforms (10), and a second crucible (16) for receiving carbide former material (22), the second crucible (16) being arranged above the first crucible (14) in relation to the direction of gravitational force and a crucible base (30) of the second crucible (16) having one or more openings (34), through which liquid carbide former material can be dripped and/or poured onto the at least one preform (10) in the first crucible (14).

31. Device according to claim 30, **characterised in that** the first crucible (14) and the second crucible (16) are arranged and configured in such a way that a crucible base (30) of the second crucible (16) is spaced apart from a preform (10) to be infiltrated, which is arranged in the first crucible (14).

32. Device according to claim 30 or 31, **characterised in that** the at least one opening (34) has an opening width in the range between 0.1 mm and 10 mm.

33. Device according to any one of claims 30 to 32, **characterised in that** the at least one opening (34) is arranged in a recessed region (36).

34. Device according to any one of claims 30 to 33, **characterised in that** the second crucible (16) comprises at least one oblique face (28).

35. Device according to claim 34, **characterised in that** a cone (26) made of firing aids is arranged in the second crucible (16).

36. Device according to any one of claims 30 to 35, **characterised in that** at least one crucible (14; 16) is produced from graphite.

37. Device according to any one of claims 30 to 36, **characterised in that** the crucible surfaces are at least partially provided with a release agent.

38. Device according to claim 37, **characterised in that** boron nitride or silicon carbide is used as the release agent.

39. Device according to any one of claims 30 to 38, **characterised in that** a carbon-containing material (38) is arranged in the first crucible (14) between the crucible base (20) and preform (10).

40. Device according to any one of claims 30 to 39, **characterised in that** the second crucible (41) is divided.

41. Device according to any one of claims 30 to 40, **characterised in that** a loading (50) is provided for the preform (10) during the pyrolysis and is at least partially permeable to liquid carbide former material.

42. Device according to claim 41, **characterised in that** the loading is configured as a grid (50).

43. Device according to claim 41 or 42, **characterised in that** the loading (50) is positioned between the preform (10) and the second crucible (16).

44. Device according to any one of claims 30 to 43, **characterised in that** a stack (56) is formed with a plurality of crucible combinations (68a, 68b) of a first crucible (60) and a second crucible (62).

## Revendications

1. Procédé pour l'infiltration d'une substance formant un carbure, en particulier pour l'infiltration de silicium, dans un corps préliminaire poreux contenant du carbone, dans lequel une substance liquide formant un carbure est déversée et/ou versée goutte à goutte sur la surface du corps préliminaire, une substance solide formant le carbure étant fondue dans au moins un creuset et le fond d'au moins un des creusets étant pourvu d'une ou plusieurs ouvertures, par lesquelles la substance liquide formant un carbure est amenée vers le corps préliminaire.

2. Procédé selon la revendication 1, **caractérisé en ce que** la substance liquide formant le carbure est amenée à la surface sous la forme d'un jet continu et/ou d'un goutte à goutte.

3. Procédé selon la revendication 1 ou 2, **caractérisé en ce qu'**une source de la substance liquide formant le carbure est positionnée à une certaine distance par rapport à la surface du corps préliminaire destinée à recevoir la substance formant le carbure.

4. Procédé selon l'une quelconque des revendications précédentes, **caractérisé en ce qu'**une source de la substance liquide formant le carbure est positionnée au-dessus de la surface du corps préliminaire destinée à recevoir la substance formant le carbure.

5. Procédé selon l'une quelconque des revendications précédentes, **caractérisé en ce que** le corps préliminaire et la zone dans laquelle la substance liquide formant le carbure est produite sont séparés dans l'espace.

6. Procédé selon l'une quelconque des revendications précédentes, **caractérisé en ce que** la substance liquide formant le carbure est obtenue par fusion d'une substance solide formant un carbure.

7. Procédé selon la revendication 6, **caractérisé en ce que** la substance solide formant le carbure se présente sous la forme de granulés.

8. Procédé selon la revendication 6 ou 7, **caractérisé en ce que** la substance solide formant le carbure est positionnée au-dessus du corps préliminaire à une certaine distance de celui-ci.

9. Procédé selon l'une quelconque des revendications précédentes, **caractérisé en ce que** le au moins un creuset est positionné au-dessus du corps préliminaire.

10. Procédé selon l'une quelconque des revendications précédentes, **caractérisé en ce qu'**au moins une ouverture présente une largeur d'ouverture allant de 0,1 mm à 10 mm.

11. Procédé selon l'une quelconque des revendications précédentes, **caractérisé en ce qu'**une pluralité d'ouvertures est prévue, les ouvertures étant disposées et formées de telle façon que le corps préliminaire peut être recouvert uniformément par la substance liquide formant le carbure.

12. Procédé selon l'une quelconque des revendications précédentes, **caractérisé en ce qu'**un ou plusieurs plans inclinés par rapport à l'horizontale sont prévus pour le au moins un creuset.

13. Procédé selon l'une quelconque des revendications précédentes, **caractérisé en ce que** le au moins un creuset présente une ou plusieurs zones en renfoncement, dans lesquelles au moins une ouverture est aménagée.

14. Procédé selon l'une quelconque des revendications précédentes, **caractérisé en ce que** des moyens de combustion pour la substance formant le carbure sont disposés dans le au moins un creuset pour contrôler le flux de substance liquide formant le carbure.

15. Procédé selon la revendication 14, **caractérisé en ce que** le moyen de combustion sont en forme de cônes.

16. Procédé selon l'une quelconque des revendications précédentes, **caractérisé en ce que** le au moins un creuset est divisé.

17. Procédé selon l'une quelconque des revendications précédentes, **caractérisé en ce que** la distance entre la surface du corps préliminaire à recouvrir et une ouverture d'au moins un creuset pour la substance liquide formant le carbure va de 1 mm à 15 mm.

18. Procédé selon l'une quelconque des revendications précédentes, **caractérisé en ce que** le corps préliminaire est positionné dans un creuset.

19. Procédé selon la revendication 18, **caractérisé en ce qu'**un matériau contenant du carbone est positionné entre le corps préliminaire et le fond du creuset.

20. Procédé selon la revendication 18 ou 19, **caractérisé en ce que** le matériau contenant du carbone se présente sous forme de granulés ou d'une poudre.

21. Procédé selon la revendication 19 ou 20, **caractérisé en ce que** le matériau contenant du carbone n'a pas une porosité ouverte.

22. Procédé selon l'une des revendications précédentes, **caractérisé en ce que** l'infiltration de la substance formant le carbure est réalisée dans un four.

23. Procédé selon l'une des revendications précédentes, **caractérisé en ce que** l'infiltration de la substance formant le carbure est réalisée après une pyrolyse, la pyrolyse et l'infiltration de la substance formant le carbure étant réalisées dans le même four sans retrait du corps préliminaire après la pyrolyse.

24. Procédé selon la revendication 23, **caractérisé en ce qu'**une charge est utilisée pour la pièce lors de la pyrolyse, laquelle est au moins partiellement perméable à la substance liquide formant le carbure.

25. Procédé selon la revendication 24, **caractérisé en ce qu'**une grille est utilisée comme charge.

26. Procédé selon l'une des revendications précédentes, **caractérisé en ce qu'**un matériau métallique est utilisé comme substance formant un carbure.

27. Procédé selon l'une des revendications précédentes, **caractérisé en ce que** du silicium est utilisé comme substance formant un carbure.

28. Procédé selon l'une des revendications précédentes, **caractérisé en ce qu'**une combinaison de creusets est formée avec un creuset pour accueillir un ou plusieurs corps préliminaires et un creuset pour la substance céramique en carbure.

29. Procédé selon la revendication 28, **caractérisé en ce qu'**une pluralité de combinaisons de creusets est disposée en une pile.

30. Dispositif pour l'infiltration d'une substance formant un carbure d'un corps préliminaire poreux contenant un carbone (10), en particulier pour l'infiltration de silicium dans le corps préliminaire (10), comprenant au moins un premier creuset (14) pour accueillir un ou plusieurs corps préliminaires (10), et un deuxième creuset (16) pour accueillir la substance formant un carbure (22), le deuxième creuset (16) étant disposé au-dessus du premier creuset (14) et le fond (30) du deuxième creuset (16) présentant une ou plusieurs ouvertures (34), par lesquelles la substance liquide formant un carbure peut s'égoutter et/ou s'écouler sur le au moins un corps préliminaire (10) dans le premier creuset (14).

31. Dispositif selon la revendication 30, **caractérisé en ce que** le premier creuset (14) et le deuxième creuset (16) sont disposés et formés de telle façon que le fond (30) du deuxième creuset (16) est à distance d'un corps préliminaire à infiltrer (10), qui est disposé dans le premier creuset (14).

32. Dispositif selon la revendication 30 ou 31, **caractérisé en ce qu'**au moins une ouverture (34) présente une largeur d'ouverture allant de 0,1 mm à 10 mm.

33. Dispositif selon l'une des revendications 30 à 32, **caractérisé en ce qu'**au moins une ouverture (34) est disposée dans une zone en renfoncement (36).

34. Dispositif selon l'une des revendications 30 à 33, **caractérisé en ce que** le deuxième creuset (16) comprend au moins une surface en biais (28).

35. Dispositif selon la revendication 34, **caractérisé en ce qu'**un cône (26) est disposé dans le deuxième creuset (16) en tant que moyen de combustion.

36. Dispositif selon l'une des revendications 30 à 35, **caractérisé en ce qu'**au moins un creuset (14 ; 16) est fabriqué en graphite.

37. Dispositif selon l'une des revendications 30 à 36, **caractérisé en ce que** les surfaces des creusets sont pourvues au moins partiellement d'un agent de séparation.

38. Dispositif selon la revendication 37, **caractérisé en ce que** du nitrure de bore ou du carbure de silicium est utilisé comme agent de séparation.

39. Dispositif selon l'une des revendications 30 à 38, **caractérisé en ce qu'**une substance contenant du carbone (38) est disposée dans le premier creuset (14) entre le fond du creuset (20) et le corps préliminaire (10).

40. Dispositif selon l'une des revendications 30 à 39, **caractérisé en ce que** le deuxième creuset (41) est divisé.

41. Dispositif selon l'une des revendications 30 à 40, **caractérisé en ce qu'**une charge (50) est prévue pour le corps préliminaire (10) lors de la pyrolyse, laquelle charge est au moins en partie perméable à la substance liquide formant le carbure.

42. Dispositif selon la revendication 41, **caractérisé en ce que** la charge est formée par une grille (50).

43. Dispositif selon la revendication 41 ou 42, **caractérisé en ce que** la charge (50) est positionnée entre le corps préliminaire (10) et le deuxième creuset (16).

44. Dispositif selon l'une des revendications 30 à 43, **caractérisé en ce qu'**une pile (56) est formée par une pluralité de combinaisons de creusets (68a, 68b) comprenant un premier creuset (60) et un deuxième creuset (62).
